# EUROPEAN PATENT APPLICATION

(11) **EP 3 086 234 A1**
(43) Date of publication of application: **26.10.2016**
(21) Application number: 14871752.3
(22) Date of filing: 12.12.2014
(51) Int. Cl.: G06F 12/00

(54) **WRITE INFORMATION STORAGE DEVICE, METHOD, AND RECORDING MEDIUM**

(30) Priority: 17.12.2013 JP 2013260132
(71) Applicant: NEC Corporation, Tokyo 108-8001 (JP)
(72) Inventor: MURATA, Akihiro, Tokyo 108-8001 (JP)
(74) Representative: Vossius & Partner Patentanwälte Rechtsanwälte mbB
(86) International application number: PCT/JP2014/006220
(87) International publication number: WO 2015/093026

(57) **Abstract**

This invention efficiently reads out written data from differential data and restores a write state back to an arbitrary time in the past. A storage device of this invention includes list storage means for storing a data list which records a write record including a data string and an address range to be written per write request issued to a data storage unit to clearly show a time series of write requests and index storage means for storing a binary search tree for a node including an address range of the data storage unit as a key value range and pointer information to a write record including the newest data in such address range.

## Description

### Technical Field

This invention relates to a write information storage device, method and recording medium, and specifically a write information storage device, method and recording medium for accumulating write request information issued to a storage device for storing data to read out updated data therefrom.

### Background Art

For protecting data in a storage device, a program requiring write processing cannot be executed while the data in the storage device can be only referenced (read out). In order to allow the program to be executed, a method is used for retaining, in another storage device, differential data which represents a difference from the data in the storage device and writing only the differential data. In this method, the differential data is first read out among written data and if there is no corresponding data, data saved in the protected storage device is read out.

NPL 1 discloses a format of the differential data. This format retains a bit map of a block having a difference caused by writing and retains updated block data.

NPL 2 discloses an AVL tree (AVL tree, Adelson-Velskii and Landis' tree).

PTL 1 discloses a storage device including a second volume for storing a write history on a first volume which stores data and a third volume for storing replicated data in the first volume as of a specific time. This storage device references the write history stored in the second volume and rewrites the replicated data stored in the third volume into replicated data in the first volume as of a different time from such specific time.

A computer system of PTL 2 accumulates an update history of a file system on a secondary storage device independent of the file system. This update history stores contents before updating. Consequently, this computer system can restore a file system image back to a predetermined time in the past.

A system of the PTL 3 technology recovers data back to a time in the past using a revision history.

### Citation List

### Patent Literature

PTL 1: Japanese Unexamined Patent Application Publication No. 2008-33527
PTL 2: Japanese Unexamined Patent Application Publication No. 2005-50024
PTL 3: Japanese Unexamined Patent Application Publication (Translation of PCT Application) No. 2008-511083

### Non Patent Literature

NPL 1: Virtual Hard Disk Image Format Specification, Microsoft Corporation, Ver. 1. 0, 2006
NPL 2: Georgii M. Adelson-Velskii and Evgenii M. Landis, An algorithm for the organization of information, Doklady Akademii Nauk SSSR, 146:263-266, 1962 (Russian). (English translation by Myron J. Ricci in Soviet Math. Doklady, 3:1259-1263, 1962.)

### Summary of Invention

### Technical Problem

The system with the foregoing method has a problem efficiently reading out written data from differential data and restoring a write state to an arbitrary time in the past.

The system using differential data in the NPL 1 format overwrites the differential data when there is a write to an overlapped address segment. Therefore, this system cannot restore the write state back to an arbitrary time in the past.

The system of PTL 1 uses write history data only for data update of the third volume and does not read out the newest write data from the write history data. The same applies to technologies of PTL 2 and PTL 3.

An exemplary aspect of this invention is to provide a write information storage device, method and recording medium to solve the problem described above.

### Solution to Problem

According to the exemplary aspect of the present invention, a write information storage device, includes:
list storage means for storing a data list which records a write record comprising a data string and an address range to be written per write request issued to a data storage unit to clearly show a time series of write requests, and
index storage means for storing a binary search tree for a node comprising an address range of the data storage unit as a key value range and pointer information to a write record comprising newest data in such address range.

A method according to the exemplary aspect of the invention includes:
storing a data list for recording a write record which includes a data string and an address range to be written per write request issued to a data storage unit to clearly show a time series of write requests, and
storing a binary search tree for a node comprising an address range of the data storage unit as a key value range and pointer information to a write record comprising newest data in such address range.

### Advantageous Effects of Invention

A device regarding this invention can efficiently read out updated data from differential data and restore a write state back to an arbitrary time in the past.

### Brief Description of Drawings

Fig. 1 is a configuration diagram of the write information storage device 1 regarding the first exemplary embodiment of this invention.
Fig. 2 is a diagram showing a data structure of the data list 221.
Fig. 3 is a diagram showing a data structure of each node 112 configuring the self-balancing binary search tree 111.
Fig. 4 is a diagram showing an example of a configuration method of the data list 221 and the self-balancing binary search tree 111 which are created for a sequence example of a write request.
Fig. 5 is a flowchart of an operation of the search and update unit 33 which receives a write request when the data storage unit 21 is write-protected.
Fig. 6A is a diagram showing a process where the search and update unit 33 removes overlapped parts from key value ranges for overlapping nodes (Case 1-A).
Fig. 6B is a diagram showing a process where the search and update unit 33 reduces key value ranges and inserts a new node into a position of the top overlapping node (Case 1-B).
Fig. 6C is a diagram showing a process where the search and update unit 33 rotates the nodes (Case 1-C).
Fig. 7A is a diagram showing a process where the search and update unit 33 removes the overlapped parts from a key value range for the overlapping node.
Fig. 7B is a diagram showing a process where the search and update unit 33 inserts the divided nodes into the subtrees.
Fig. 8 is a configuration diagram of the write information storage device 1 of the second exemplary embodiment.
Fig. 9 is a configuration diagram of the write information storage device 1 of the third exemplary embodiment.

### Description of the Exemplary Embodiments

### <First Exemplary Embodiment>

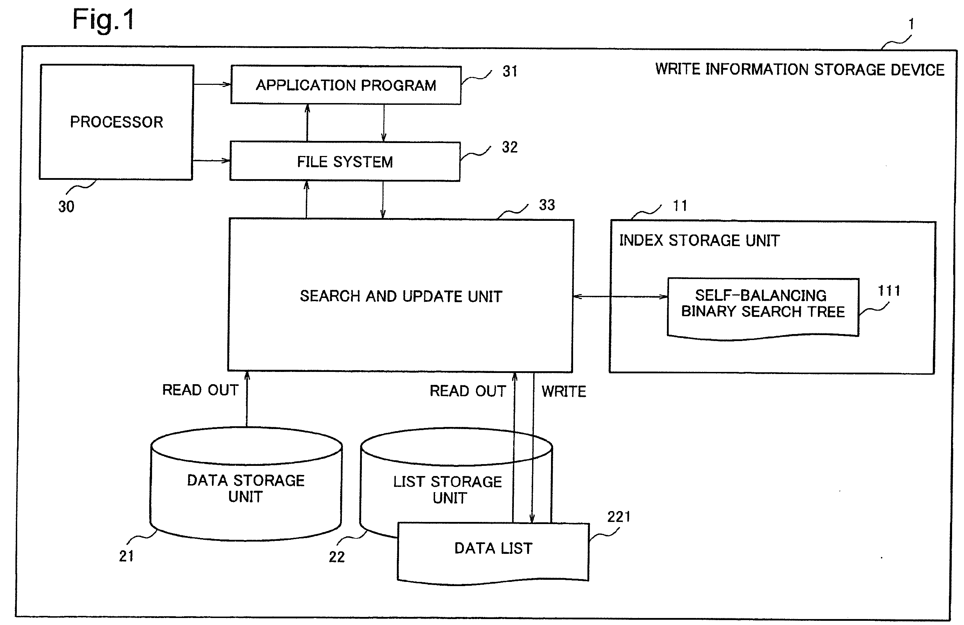

Fig. 1 is a configuration diagram of the write information storage device 1 regarding the first exemplary embodiment of this invention.

The write information storage device 1 is, for example, a computer. A processor 30 in the write information storage device 1 executes the application program 31 and instructions from the file system 32. The file system 32 reads data stored in the data storage unit 21 and writes data thereto. The write information storage device 1 also includes the search and update unit 33, the list storage unit 22 and the index storage unit 11.

The search and update unit 33 receives an instruction from the file system 32 and reads data in the data storage unit 21 and writes data thereto. The data storage unit 21, however, may be temporarily write-protected and read-only. This write protection is done by, for example, a backup program (not shown) for storing backup data of the data storage unit 21 in such as a backup disk device (not shown). The backup program may be executed by the write information storage device 1 or another computer (not shown) that shares the data storage unit 21.

If the file system 32 makes a write request during a write protection period, the search and update unit 33 stores on a data list 221 in the list storage unit 22, the write request including write data. When the write protection is cancelled, the search and update unit 33 updates (rolls forward) the data in the data storage unit 21 based on contents in the data list 221.

If the file system 32 makes a read request during the write protection period, the search and update unit 33 reads out data from a read area on the data list 221 in case that the data is stored on the data list 221 or reads out data from the data storage unit 21 in case that the data is not stored in the read area on the data list 221. If data are written in the read area a number of times, generations of the data are repeatedly stored in the read area on the data list 221. In this case, the search and update unit 33 reads out the newest data per address in the read area. To improve the rate of reading out the newest data from the data list 221, the search and update unit 33 creates an index for the data list 221 in the index storage unit 11. This index is the self-balancing binary search tree 111.

It is noted that the file system 32 assigns an address range of a storage area and a data string in the data storage unit 21 when it issues a write instruction to the search and update unit 33. The file system 32 assigns an address range of a storage area in the data storage unit 21 when it issues a read instruction. It is noted that the address range is, for example, a start address and an end address, or a start address and a data length.

The search and update unit 33 is configured with a logic circuit. The search and update unit 33 may be a logic circuit mainly configured with a different microprocessor from the processor 30. Furthermore, the search and update unit 33 may be stored in a memory of the write information storage device 1 and realized by a program which is executed by the processor 30. The data storage unit 21 and the list storage unit 22 are, for example, disk devices. The index storage unit 11 is an IC memory (Integrated Circuit) or a disk device.

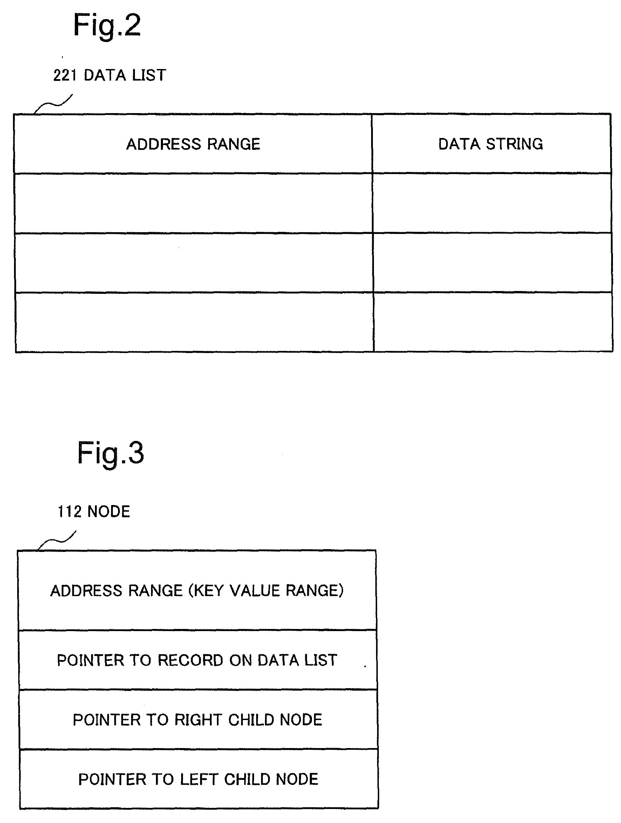

Fig. 2 is a diagram showing a data structure of the data list 221. The data list 221 stores a write record per write request, including its address range and data string. The write record is, for example, stored in order of the write time. The write record may contain the write time, and based on the value, the search and update unit 33 may determine a time series of write records.

Fig. 3 is a diagram showing a data structure of each node 112 configuring the self-balancing binary search tree 111. Each node 112 contains an address range, a write record in the data list 221, including the newest data in such address range, or a pointer to a character string in the write record (for example, an offset from the top-of-file of the data list 221), and a pointer to right and left lower-level nodes 112 in a subtree (hereinafter referred to as child nodes). The self-balancing binary search tree 111 is retrieved, using an address as a key. Therefore, the address range of the node 112 is sometimes called a key value range.

The self-balancing binary search tree 111 is an AVL tree (see NPL 2). The self-balancing binary search tree 111 has at most one difference in height between the respective right and left subtrees.

The search and update unit 33 needs to determine the magnitude relation among key values in an AVL tree. Because of this, a write request address range which could overlap, contain or be contained in another one (hereinafter referred to as a write segment) cannot turn to a key value without change. Therefore, the search and update unit 33 eliminates overlaps in the key value ranges among the nodes 112 when it updates the self-balancing binary search tree 111. This allows the search and update unit 33 to use a specific address as a retrieval key and retrieve the nodes 112 in the segment including such retrieval key or in the segments before and after the segment.

The search and update unit 33 can start at a root node of the nodes 112 and follow right child nodes in case of the address segment where a key value range of a node 112 is larger than a retrieval key and left child nodes in case of the address segment where a key value range of a node 112 is smaller than a retrieval key. In this manner, the search and update unit 33 can retrieve positional information of data strings on the data list 221 corresponding to the segment including the specific address or segments before and after the segment.

It is noted that, for simplicity, a child node whose key value range is smaller than the one of a parent node is called a left node and a child node whose key value range is larger than the one of a parent node is called a right node in this description, but the names and the magnitude relations of key values are not limited to these examples.

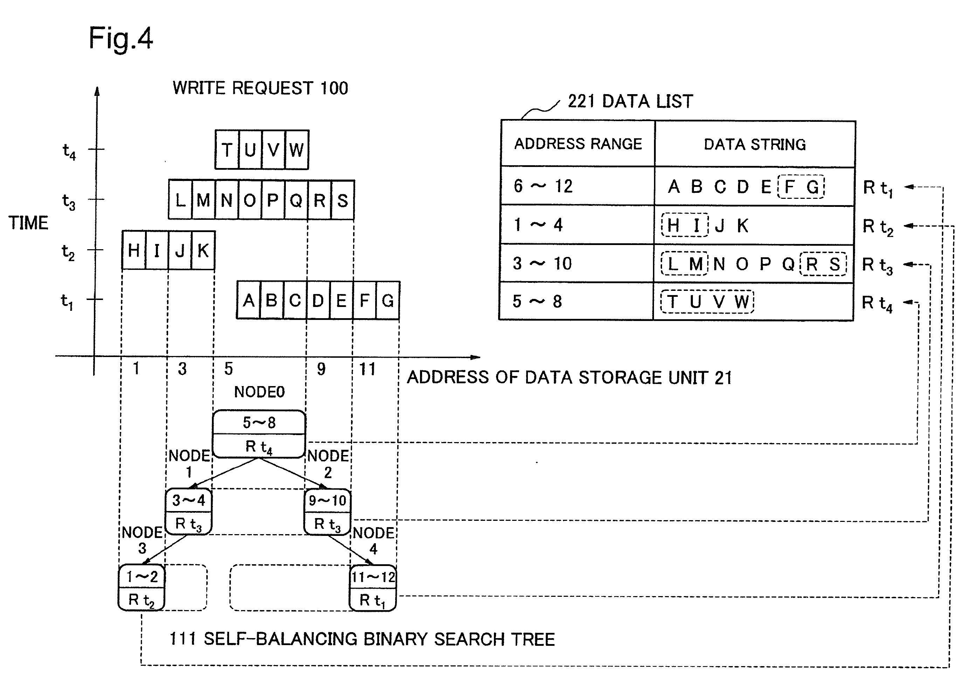

Fig. 4 is a diagram explaining an example of a configuration method of the data list 221 and the self-balancing binary search tree 111 which are created for a sequence example of the write request 100.

The upper left of Fig. 4 shows a sequence example of the write request 100. In the sequence example, the horizontal axis shows an address of the data storage unit 21 and the vertical axis shows time (including time t1, t2, t3 and t4). In this sequence example, the search and update unit 33 receives the following four write requests as a write request 100 in time-series order.
- At the time t1, a character string "ABCDEFG" in an area of the addresses 6 to 12
- At the time t2, a character string "HIJK" in an area of the addresses 1 to 4
- At the time t3, a character string "LMNOPQRS" in an area of the addresses 3 to 10
- At the time t4, a character string "TUVW" in an area of the addresses 5 to 8

The write request 100 includes the character strings described above as data strings. When the write request 100 of Fig. 4 is received, the search and update unit 33 creates the data list 221 shown in the upper right of Fig. 4. For a write at the time t1, the search and update unit 33 first stores the write record Rt1 which contains a write segment and a data string of the write request 100 on the data list 221. Then, for write requests at the times t2, t3 and t4, the search and update unit 33 additionally writes the write records Rt2, Rt3 and Rt4 at the end of the data list 221 in sequence.

When the write request 100 of Fig. 4 is received, the search and update unit 33 generates the self-balancing binary search tree 111 including five nodes 112 as shown in the lower left of Fig. 4. It means that any address ranges of respective nodes 112 are not overlapped with or contained in one another and a node 1 is located at a child node to the left of a root node 0, a node 3 is located at a child node to the left of the node 1, a node 2 is located at a child node to the right of the root node 0 and a node 4 is located at a child node to the right of the node 2. Therefore, the search and update unit 33 can use an address as a retrieval key to search the newest data in the self-balancing binary search tree 111. Contents of each node of the self-balancing binary search tree 111 are as follows.
- Node 3: This node 112 includes the key value ranges 1 to 2 and a pointer to the write record Rt2 and shows that the newest data in the area of the addresses 1 to 2 is "HI", which is a write data string at the time t2.
- Node 1: This node 112 includes the key value ranges 3 to 4 and a pointer to the write record Rt3 and shows that the newest data in the area of the addresses 3 to 4 is "LM", which is a write data string at the time t3.
- Node 0: This node 112 includes the key value ranges 5 to 8 and a pointer to the write record Rt4 and shows that the newest data in the area of the addresses 5 to 8 is "TUVW", which is a write data string at the time t4.
- Node 2: This node 112 includes the key value ranges 9 to 10 and a pointer to the write record Rt3 and shows that the newest data in the area of the addresses 9 to 10 is "RS", which is a write data string at the time t3.
- Node 4: This node 112 includes the key value ranges 11 to 12 and a pointer to the write record Rt1 and shows that the newest data in the area of the addresses 11 to 12 is "FG", which is a write data string at the time t1.

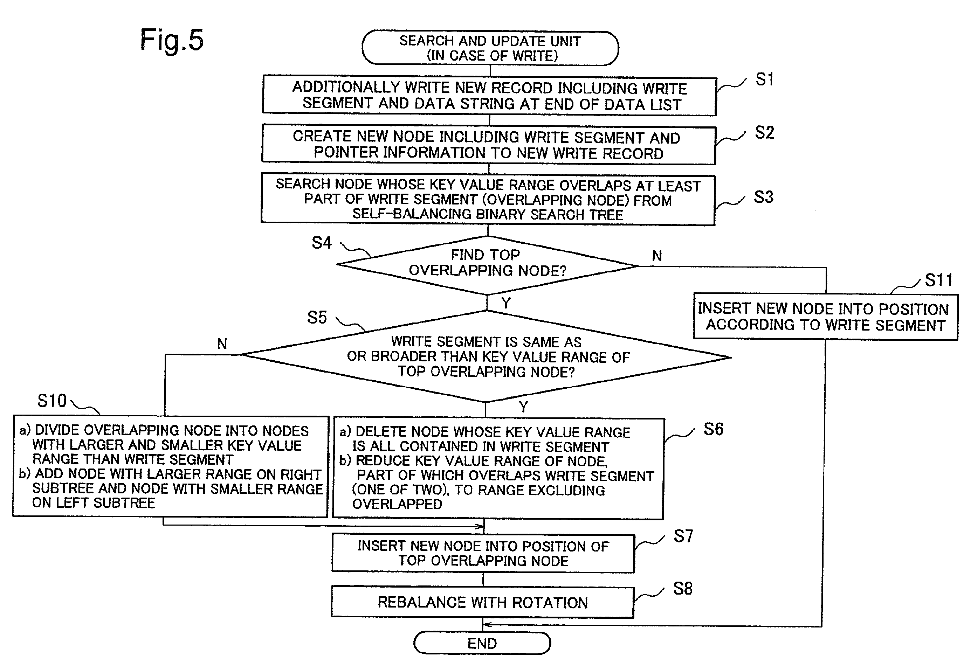

Fig. 5 is a flowchart of an operation of the search and update unit 33 which receives a write request when the data storage unit 21 is write-protected. The search and update unit 33 updates the data list 221 and the self-balancing binary search tree 111.

The search and update unit 33 additionally writes a new write record including a write segment and a write data string at the end of the data list 221 (S1). Next, the search and update unit 33 creates a new node 112 including the write segment of the new write record and pointer information to the new write record (S2).

Then, the search and update unit 33 searches an overlapping node (S3). This overlapping node is a node 112 whose key value range overlaps at least part of the write segment. If there is an overlapping node (Y in S4), the search and update unit 33 removes an overlapped part from a key value range of the overlapping node (S5, S6, S10) and inserts a newly created node 112 at the same position as an overlapping node (hereinafter referred to as the top overlapping node) which is followed from a root node 112 and first found (S7). Inserting a node 112 at the same position indicates that the node 112 is pointed out by the same child node pointer of the same parent node. Then, the search and update unit 33 rebalances the self-balancing binary tree (S8).

More specifically, for removing the overlapped part, the search and update unit 33 follows nodes from the root node to search a top overlapping node (S3), and if there is the top overlapping node (Y in S4), it compares the write segment and a key value range of such node 112 (S5).

If both are the same or the write segment is larger than the key value range of the top overlapping node (Y in S5), the search and update unit 33 deletes a node 112 whose key value range is all contained in the write segment from the right and left subtrees ((a) in S6).

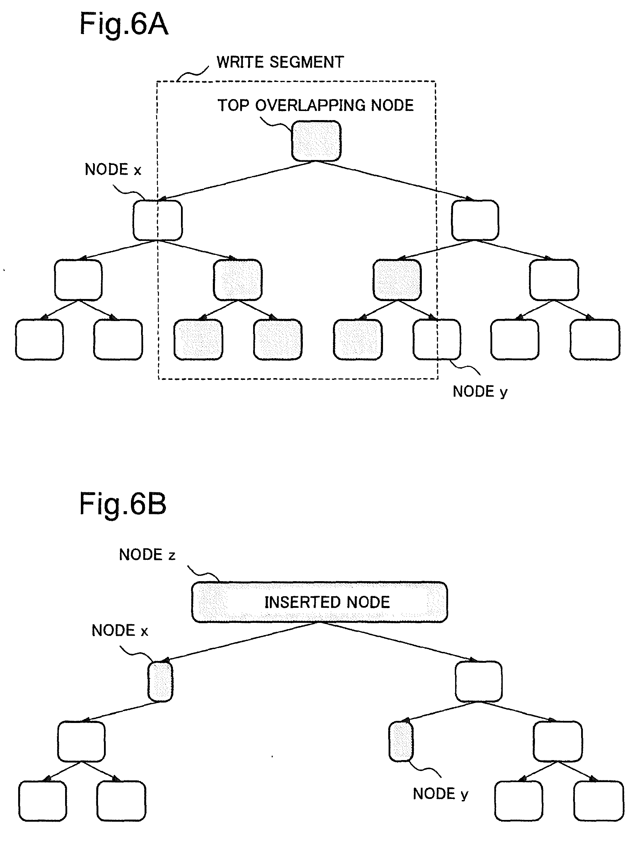

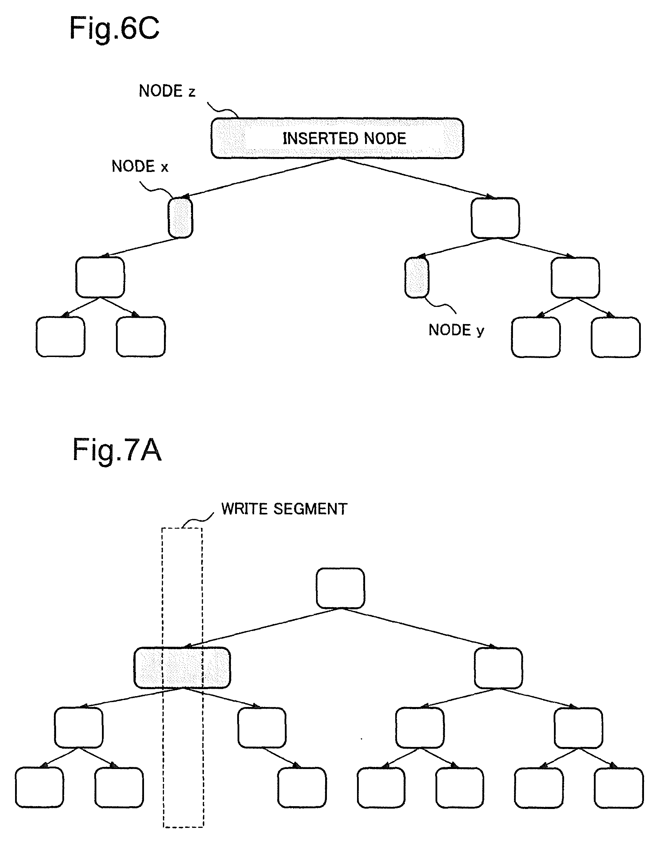

With reference to Figs. 6A to 6C, an example of searching and removing operation of an overlapping node is now described. Fig. 6A is a diagram showing a process where the search and update unit 33 removes overlapped parts from key value ranges for overlapping nodes. This is called Case 1-A. Fig. 6B is a diagram showing a process where the search and update unit 33 reduces key value ranges and inserts a new node into a position of the top overlapping node. This is called Case 1-B. Also, Fig. 6C is a diagram showing a process where the search and update unit 33 rotates the nodes. This is called Case 1-C.

For example, in Case 1-A, the search and update unit 33 removes shaded nodes 112 (the nodes whose key value ranges overlap the write segment) in the write segment within the dashed lines in the self-balancing binary search tree 111 shown in Fig. 6A. In Case 1-B, the search and update unit 33 further reduces the key value ranges of the nodes 112, part of whose key value range overlaps the write segment (one of two), to a range excluding the overlapped range (the other of the two) (b) in S6). In this case, the search and update unit 33, for example, cuts the parts overlapped with the write segment from the key value ranges of the nodes x and y in Fig. 6A to reduce the key value ranges (Fig. 6B).

The search and update unit 33 inserts a newly created node 112 (the node z in Fig. 6B) into a position of the top overlapping node (S7). For example, the search and update unit 33 inserts the new node z into a position of the top overlapping node. It is noted that the search and update unit 33 may update the top overlapping node data with data of the new node 112.

Lastly, as Case 1-C shown in Fig. 6C, the search and update unit 33 rebalances the tree with rotation of the nodes 112 (S8). Specifically, the search and update unit 33 rotates the node x to make a difference in height between the right and left subtrees at most one. It is noted that the detailed explanation of the rotation is omitted because it is a well-known manipulation for a binary search tree.

The search and update unit 33 may execute processing of S6 and S7 described above as follows.

Firstly, the search and update unit 33 follows nodes from the root node 112, finds the top overlapping node, updates this node 112 with new write information and deletes nodes 112 in the segment which are overwritten by this write from the right and left subtrees.

In this processing, the search and update unit 33 uses an end position address of the write segment as a retrieval key for the right subtree, and follows a left child node in case of the address segment where a key value of a node 112 is larger than the retrieval key and collectively deletes a node 112 and its left subtree in case of the address segment where a key value of the node 112 is smaller than the retrieval key. At this time, the search and update unit 33 changes a pointer so that the right child nodes of the node 112 can be followed as new child nodes from the parent node. Next, the search and update unit 33 follows the right child nodes and reduces the key value segments such that the segments to the left of the retrieval key is cut in case of the segment including the retrieval key.

After the search and update unit 33 reaches a node 112 without a child node (a leaf node) or which has the segment including the retrieval key as the key value, it rebalances the AVL tree with following back the path. It means that the search and update unit 33 does the processing to reduce a difference in height between the right and left trees by rotation manipulation on the tree structure if the difference in height between the right and left subtrees is two or more.

The search and update unit 33 similarly processes the subtree to the left of the top overlapping node. It means that the search and update unit 33 uses a start position address of the write segment as a retrieval key, and follows the right child nodes in case of the address segment where a key value of a node 112 is smaller than the retrieval key and collectively deletes a node 112 and its right subtree in case of the address segment where a key value of the node 112 is larger than the retrieval key. At this time, the search and update unit 33 changes a pointer so that the left child nodes of the node 112 can be followed as new child nodes from the parent node. Next, the search and update unit 33 follows the left child nodes and reduces the key value segments such that the segments to the right of the retrieval key is cut in case of the segment including the retrieval key.

Then, after the search and update unit 33 reaches a leaf node or a node 112 which has the segment including the retrieval key as the key value, it follows back the path to do the rebalance processing.

In the meantime, if the aforementioned determination at S5 is false (N in S5) and the write segment is narrower than the key value range of the top overlapping node, the search and update unit 33 divides such node 112 into a node 112 whose key value range is larger than the write segment and a node 112 whose key value range is smaller than the write segment (a) in S10). The search and update unit 33, for example, separates a node p with the segment where a key value is smaller than the write segment (the segment within the dashed lines in Fig. 7A) and a node q with the segment where a key value is larger than the write segment from the shaded node 112 shown in Fig. 7A.

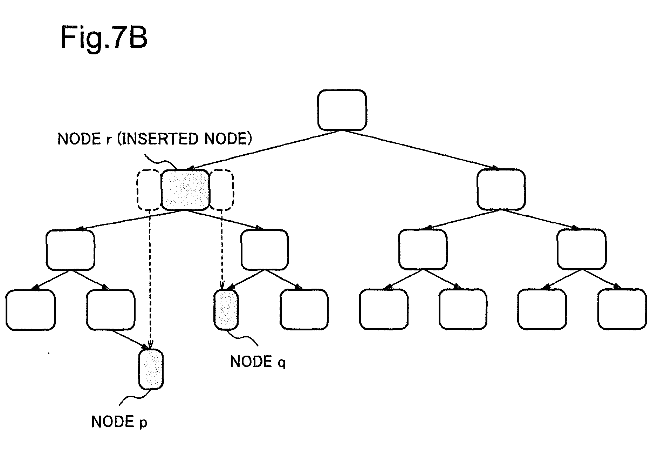

Next, the search and update unit 33 adds a node 112 with the larger key value range on the right subtree and a node 112 with the smaller key value range on the left subtree (b) in S10). For example, as shown in Fig. 7B, the search and update unit 33 inserts the node p with the segment where a key value is smaller than the write segment into the left subtree and a node q with the segment where a key value is larger than the write segment into the right subtree. These segments which are key values of the inserted nodes p and q do not overlap segments in the subtrees. Therefore, the search and update unit 33 can insert the nodes p and q similarly to usual insert processing for an AVL tree.

The search and update unit 33 inserts a newly created node 112 into a position of the top overlapping node (S7). For example, the search and update unit 33 inserts the new node r into a position of the top overlapping node. It is noted that the search and update unit 33 may update the top overlapping node data with data of the new node 112.

Then, the search and update unit 33 follows back the path from the root node 112 to the top overlapping node to do the rebalance processing (S8).

It is noted that if the aforementioned determination at S5 is false (N in S5) and the write segment is overlapped with the key value range of the top overlapping node but not entirely, the search and update unit 33 does the following processing (not shown in Fig. 5). Firstly, the search and update unit 33 does the processing described in S6 for a) the overlapped part where the write segment and the key value range of the top overlapping node overlap and b) the part where the write segment exceeds the key value range of the top overlapping node (larger or smaller than the key value of the top overlapping node). Further, for c) the part where the key value range of the top overlapping node exceeds the key value range of the write segment (larger or smaller than the key value of the write segment), the search and update unit 33 adds a node 112 with such segment, for example, the top overlapping node after its key value range is reduced, on the right or left subtree.

It is noted that if there is no overlapping node (N in S4), the search and update unit 33 inserts a new node 112 into a position according to the write segment (S11). This segment which is a key value of the inserted node 112 does not overlap segments in the self-balancing binary search tree 111. Therefore, the search and update unit 33 can insert such node 112 similarly to usual insert processing for an AVL tree.

When the application program 31 requests data readout through the file system 32, the search and update unit 33 uses a start address of the assigned address range (hereinafter referred to as a read segment) as a key to retrieve a node 112 whose start address is contained in the key value range from the self-balancing binary search tree 111. When such node 112 is found, the search and update unit 33 reads out data in a segment where the key value range of such node 112 and the read segment overlaps from the write record of the data list 221 which a pointer of such node 112 indicates.

After this, the search and update unit 33 reads out a write data string in order of addresses until an end address of the read segment. It is noted that the search and update unit 33 reads out data from the data storage unit 21 for a segment without a data string on the data list 221 in the read segment.

Lastly, the search and update unit 33 combines the data strings which are read out from the data list 221 or the data storage unit 21 to generate a data string of the read segment and returns the data string as a read result through the file system 32 to the application program 31.

When a write state is restored back to a certain time in the past, the search and update unit 33 initializes the self-balancing binary search tree 111 on the index storage unit 11. Then, the search and update unit 33 deletes a write record which is an unnecessary write from the data list 221. This unnecessary write is a code which is written after the aforementioned certain time.

Lastly, the search and update unit 33 creates a new self-balancing binary search tree 111 based on write records of the data list 221. For example, the search and update unit 33 reinserts address ranges of the write records and positional information of write data strings into the self-balancing binary search tree 111 in order from the first write record (the write record with the oldest write time) on the data list 221.

The write information storage device 1 of this exemplary embodiment can efficiently read out the newest data from differential data of the data list 221 while it preserves data of the data storage unit 21. This is because the search and update unit 33 creates and uses the self-balancing binary search tree 111 for data retrieval.

For the number n of write records which are recorded on the data list 221, the number of nodes in the self-balancing binary search tree 111 is up to 2n-1 and the height of the tree is log₂(2n-1) or less. Therefore, search processing can be implemented in logarithmic order of the number of nodes in the worst case and time required for read processing does not increase in proportion to an increase of the number of write records.

Further, the write information storage device 1 of this exemplary embodiment can restore a write state back to its state before arbitrary data is written to the extent recorded on the data list 221. This is because the data list 221 stores write records per write request to make write order clear.

The write information storage device 1 of this exemplary embodiment can also efficiently implement update processing of the self-balancing binary search tree 111 with deletion of multiple overlapping nodes. In case of usual deletion processing in an AVL tree, it takes required time proportional to the number of nodes 112 to be deleted. The search and update unit 33 of this exemplary embodiment can implement the update processing in logarithmic order of the number of nodes 112 because it deletes overlapping nodes on a subtree basis while retrieving them. That is why time required for write processing does not increase in proportion to an increase of the number of write records in the write information storage device 1 of this exemplary embodiment.

### <Second Exemplary Embodiment>

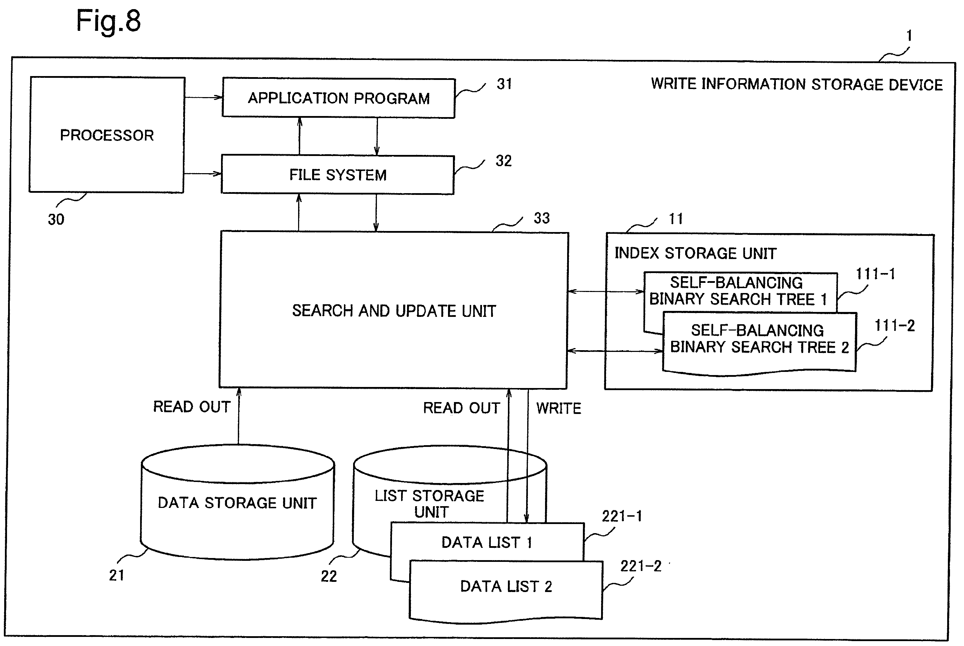

Fig. 8 is a configuration diagram of the write information storage device 1 of this exemplary embodiment. The data storage unit 21 of this exemplary embodiment stores multiple data lists 221. The list storage unit 22 stores self-balancing binary search trees 111 corresponding to respective data lists 221.

In the first exemplary embodiment, the data list 221 adds limitless write records. Even if the self-balancing binary search trees 111 bring time required for index retrieval and update under control of logarithmic order of the number of write records, time required for manipulation of the self-balancing binary search trees 111 cannot be ignored when the number of the write records unlimitedly increases.

For this problem, a measure may be taken to put a limit, up to which data can be recovered on a write basis, on the number of the write records recorded on the data lists 221, reflect older write data than the limit on the data storage unit 21 and delete it from the data list 221. However, it is not efficient to reorganize the self-balancing binary search trees 111 every time old write data is deleted from the data lists 221.

Thus, the search and update unit 33 has multiple data lists 221 and multiple self-balancing binary search trees 111 corresponding to the respective data lists 221 in the write information storage device 1 of this exemplary embodiment. When the number of write records of a data lists 221 reaches the limit, the search and update unit 33 switches a destination to add the write records to a new data list 221 and collectively reflects contents of the old data list 221 on the data storage unit 21. This lets the search and update unit 33 reflect the old write data on the data storage unit 21 without reorganizing the self-balancing binary search trees 111.

For reading out data, the search and update unit 33 first retrieves and reads out a write data string from a data list 221 which is additionally writing a write record. The search and update unit 33 retrieves data from multiple data lists 221 in reverse chronological order. For example, if there is no data in a segment, it retrieves and reads out data from the previous (one generation older) data list 221 and if there is no data in the previous data list 221, it retrieves and reads out data from the further older data list. If there is no data in any data lists 221, the search and update unit 33 reads out data from the data storage unit 21.

The search and update unit 33 reflects an old data list 221 on the data storage unit 21 in the background of retrieval and update processing of the newest data list 221. After the reflection is completed, the search and update unit 33 deletes the data list 221 and a self-balancing binary search tree 111 corresponding to the data list 221. This enables the search and update unit 33 to keep writing or reading out data during reflecting an old data list 221.

When a write state is restored back to a certain time in the past, the search and update unit 33 deletes unnecessary write records from a data list 221 and initializes and reorganizes only a self-balancing binary search tree 111 for the data list 221. This allows a write state to be restored back to the state before arbitrary data is written to the extent recorded on the data list 221 which is not reflected on the data storage unit 21.

The write information storage device 1 of this exemplary embodiment can efficiently retrieve and update a self-balancing binary search tree 111 even if much data is written during a write protection period of the data storage unit 21. This is because the write information storage device 1 of this exemplary embodiment includes multiple data lists 221 and self-balancing binary search trees 111.

### <Third Exemplary Embodiment>

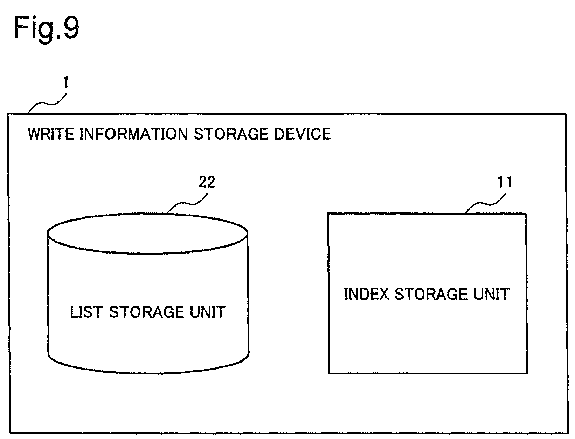

Fig. 9 is a configuration diagram of the write information storage device 1 of this exemplary embodiment. The write information storage device 1 of this exemplary embodiment includes the index storage unit 11 and the list storage unit 22.

The list storage unit 22 records a write record including a data string and an address range to be written per write request issued to a data storage unit to clearly show a time series of write requests. The index storage unit 11 stores a binary search tree for a node (for example, the node 112 shown in Fig. 3) including an address range of the data storage unit as a key value range and pointer information to a write record including the newest data in such address range.

In this exemplary embodiment, the write information storage device 1 may be a computer or an interchangeable storage medium for storing a database. When the write information storage device 1 is an interchangeable medium for storing a database, for example, a magnetic tape medium, such magnetic tape medium is mounted on a magnetic tape drive device of a computer device and a database is installed on the computer.

The write information storage device 1 of this exemplary embodiment can efficiently read out the newest data from differential data of the data lists recorded in the list recording unit 22 while it preserves data of the data storage unit. This is because it has a binary search tree for data retrieval.

The invention is described using the foregoing exemplary embodiments as good examples. However, this invention is not limited to the foregoing exemplary embodiments. Therefore, this invention may apply to various embodiments which those of ordinary skill in the art can understand within the scope of the invention.

This application claims priority based on Japanese Patent Application No. 2013-260132, filed on December 17, 2013, the disclosure of which is incorporated herein in its entirety.

### Reference signs List

1 Write information storage device
11 Index storage unit
111 Self-balancing binary search tree
112 Node, 21 Data storage unit
22 List storage unit
221 Data list, 30 Processor
31 Application program
33 Search and update unit

## Claims

1. A write information storage device, comprising:
list storage means for storing a data list which records a write record comprising a data string and an address range to be written per write request issued to a data storage unit to clearly show a time series of write requests and
index storage means for storing a binary search tree for a node comprising an address range of the data storage unit as a key value range and pointer information to a write record comprising newest data in such address range.

2. The write information storage device according to claim 1, further comprising retrieval and update means for obtaining a new write request, adding a new write record corresponding to such new write request to the data list, removing an overlapped part from a key value range for a node whose key value range overlaps at least part of a write segment of such new write request (hereinafter referred to as an overlapping node), inserting a node comprising the write segment and pointer information to the new write record into a position of an overlapping node closest to a root node and updating the binary search tree.

3. The write information storage device according to claim 2, wherein the retrieval and update means deletes a write record until a designated time in reverse chronological order from the data list and creates a new binary search tree based on a remaining write record.

4. The write information storage device according to any one of claims 2 to 3, wherein the retrieval and update means obtains a read request and outputs a data string comprised in a write record pointed by a node, at least part of whose key value range is comprised in an address range of such read request.

5. The write information storage device according to any one of claims 2 to 4, wherein the retrieval and update means deletes a node whose whole key value range is contained in the write segment, decreases a node's key value range, part of which is contained in the write segment, to a range excluding such part, removes the overlapped part by dividing a node whose key value range contains all of the write segment into two nodes, each of the nodes having a larger or smaller key value range than the write segment respectively, and further balances the binary search tree by replacing node positions to keep a difference in height between right and left subtrees of each node within at most one.

6. The write information storage device according to any one of claims 2 to 5, wherein if the number of write records in the data list reaches a predetermined number when the retrieval and update means obtains a new write request, the retrieval and update means creates a new data list and a new binary search tree corresponding to such new data list, updates data of the data storage unit based on a write record on the data list and deletes the binary search tree and the data list.

7. A method comprising:
storing a data list for recording a write record that includes a data string and an address range to be written per write request issued to a data storage unit to clearly show a time series of write requests, and
storing a binary search tree for a node comprising an address range of the data storage unit as a key value range and pointer information to a write record comprising newest data in such address range.

8. The method according to claim 7, which comprises obtaining a new write request, adding a new write record corresponding to such new write request to the data list, removing an overlapped part from a key value range for a node whose key value range overlaps at least part of a write segment of such new write request (hereinafter referred to as an overlapping node), inserting a node comprising the write segment and pointer information to the new write record into a position of an overlapping node closest to a root node and updating the binary search tree.

9. The method according to claim 8, which comprises deleting a write record until a designated time in reverse chronological order from the data list and creating a new binary search tree based on remaining a write record.

10. A recording medium of recording a program for making a computer execute processing of storing a data list which records a write record comprising a data string and an address range to be written per write request issued to a data storage unit to clearly show a time series of write requests and
storing a binary search tree for a node comprising an address range of the data storage unit as a key value range and pointer information to a write record comprising newest data in such address range.
